(19) Europäisches Patentamt
European Patent Office
Office européen des brevets

(11) **EP 3 145 012 B1**

(12) **FASCICULE DE BREVET EUROPEEN**

(45) Date de publication et mention de la délivrance du brevet:
**09.05.2018 Bulletin 2018/19**

(51) Int Cl.:
*H01M 8/04298* (2016.01)   *H01M 8/04701* (2016.01)
*C25B 9/06* (2006.01)   *C25B 15/02* (2006.01)
*H01M 4/86* (2006.01)   *H01M 8/0432* (2016.01)
*H01M 8/1018* (2016.01)

(21) Numéro de dépôt: **16189601.4**

(22) Date de dépôt: **20.09.2016**

(54) **DÉTERMINATION D'UNE DISTRIBUTION SPATIALE DE LA PERMÉABILITÉ D'UNE ÉLECTRODE DE CELLULE ÉLECTROCHIMIQUE**

BESTIMMUNG EINER RÄUMLICHEN VERTEILUNG DER PERMEABILITÄT EINER ELEKTRODE EINER ELEKTROCHEMISCHEN ZELLE

DETERMINATION OF A SPATIAL DISTRIBUTION OF THE PERMEABILITY OF AN ELECTROCHEMICAL CELL ELECTRODE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.09.2015 FR 1558896**

(43) Date de publication de la demande:
**22.03.2017 Bulletin 2017/12**

(73) Titulaire: **Commissariat à l'énergie atomique et aux énergies alternatives**
**75015 Paris (FR)**

(72) Inventeurs:
• **ROBIN, Christophe**
**38000 Grenoble (FR)**
• **VINCENT, Rémi**
**38000 Grenoble (FR)**
• **GERARD, Mathias**
**38100 Grenoble (FR)**
• **JABBOUR, Lara**
**38000 Grenoble (FR)**

(74) Mandataire: **GIE Innovation Competence Group**
**310, avenue Berthelot**
**69372 Lyon Cedex 08 (FR)**

(56) Documents cités:
**WO-A1-2013/088122   US-A1- 2009 024 373**

• SHOU DAHUA ET AL: "Effective permeability of gas diffusion layer in proton exchange membrane fuel cells", INTERNATIONAL JOURNAL OF HYDROGEN ENERGY, vol. 38, no. 25, 15 juillet 2013 (2013-07-15), pages 10519-10526, XP028687547, ISSN: 0360-3199, DOI: 10.1016/J.IJHYDENE.2013.06.043
• SHI Y ET AL: "A fractal permeability model for the gas diffusion layer of PEM fuel cells", JOURNAL OF POWER SOURCES, ELSEVIER SA, CH, vol. 160, no. 1, 29 septembre 2006 (2006-09-29), pages 277-283, XP027938252, ISSN: 0378-7753 [extrait le 2006-09-29]
• CHRISTOPHE ROBIN ET AL: "Development and experimental validation of a PEM fuel cell 2D-model to study heterogeneities effects along large-area cell surface", INTERNATIONAL JOURNAL OF HYDROGEN ENERGY., vol. 40, no. 32, 7 juillet 2015 (2015-07-07), pages 10211-10230, XP055237638, GB ISSN: 0360-3199, DOI: 10.1016/j.ijhydene.2015.05.178
• JABBOUR LARA ET AL: "Feasibility of in-plane GDL structuration: Impact on current density distribution in large-area Proton Exchange Membrane Fuel Cells", JOURNAL OF POWER SOURCES, vol. 299, 15 septembre 2015 (2015-09-15), pages 380-390, XP029297457, ISSN: 0378-7753, DOI: 10.1016/J.JPOWSOUR.2015.09.043

- Robin Christophe: "Développement d'un modèle prédictif de durée de vie d'une pile PEMFC pour une application aéronautique : étude des interactions entre le coeur de pile et les conditions d'opération du système (extrait)", (texte intégral de la thèse confidentiel jusqu'au 13-11-2017), 12 novembre 2015 (2015-11-12), XP055271391, Extrait de l'Internet: URL:http://www.theses.fr/2015GREAI057 [extrait le 2016-05-10]

**Description**

**DOMAINE TECHNIQUE**

Le domaine de l'invention est celui des réacteurs électrochimiques comportant un empilement de cellules électrochimiques, tels que les piles à combustible et les électrolyseurs, et plus précisément celui des procédés de détermination d'un paramètre représentatif de la perméabilité d'au moins une électrode de la cellule électrochimique ainsi que celui des procédés de réalisation d'une électrode de cellule électrochimique.

**ÉTAT DE LA TECHNIQUE ANTÉRIEURE**

Un réacteur électrochimique tel qu'une pile à combustible ou un électrolyseur comporte habituellement un empilement de cellules électrochimiques qui comprennent chacune une anode et une cathode séparées électriquement l'une de l'autre par un électrolyte, dans laquelle a lieu une réaction électrochimique entre deux réactifs qui sont introduits de manière continue. Dans le cas d'une pile à hydrogène, le combustible (l'hydrogène) est apporté au contact de l'anode, alors que le comburant (l'oxygène), par exemple contenu dans de l'air, est amené au contact de la cathode. La réaction électrochimique est subdivisée en deux demi-réactions, une réaction d'oxydation et une réaction de réduction, qui ont lieu respectivement à l'interface anode/électrolyte et à l'interface cathode/électrolyte. Pour avoir lieu, la réaction électrochimique requiert la présence d'un conducteur ionique entre les deux électrodes, à savoir l'électrolyte éventuellement contenu dans une membrane polymère, et un conducteur électronique formé par le circuit électrique externe. L'empilement de cellules est ainsi le lieu de la réaction électrochimique : les réactifs doivent y être apportés, les produits et les espèces non réactives doivent en être évacués, tout comme la chaleur produite lors de la réaction.

Les cellules sont habituellement séparées les unes des autres par des plaques bipolaires qui assurent l'interconnexion électrique des cellules. Les plaques comportent un circuit de distribution du carburant formé sur une face anodique et un circuit de distribution du comburant formé sur une face cathodique opposée à la face anodique. Chaque circuit de distribution prend souvent la forme d'un réseau de canaux agencés par exemple en parallèle ou en serpentin, adaptés à amener l'espèce réactive de manière homogène à l'électrode correspondante. Les plaques bipolaires peuvent également comporter un circuit de refroidissement formé d'un réseau de conduits internes qui assurent l'écoulement d'un fluide caloporteur permettant d'évacuer la chaleur produite localement lors de la réaction par la cellule.

Chaque électrode est habituellement formée d'une couche active et d'une couche de diffusion. La couche active, située entre la membrane électrolytique et la couche de diffusion, est le lieu de la réaction électrochimique. Elle comporte généralement un catalyseur, par exemple des particules de platine, disposé sur un support électriquement conducteur, par exemple carboné, et un ionomère assurant la conductivité protonique, par exemple du Nafion. La couche de diffusion est située entre la couche active et la plaque bipolaire correspondante. Elle est réalisée en un matériau poreux permettant la diffusion des espèces réactives gazeuses jusqu'à la couche active ainsi que la diffusion des produits issus de la réaction électrochimique. La couche de diffusion présente une porosité $\phi$ donnée qui définit sa perméabilité $k$, celle-ci traduisant la capacité de la couche à se laisser traverser par un fluide sous l'effet d'un gradient de pression.

On cherche habituellement à préserver la durée de vie des cellules électrochimiques par exemple en uniformisant la distribution spatiale de la densité de courant échangé par la cellule en fonctionnement. En effet, les inhomogénéités spatiales de densité de courant entraînent des inhomogénéités spatiales de température de la cellule, qui peuvent conduire, d'une part à augmenter la cinétique des réactions de dégradations des différents éléments de la cellule et d'autre part à générer des contraintes mécaniques d'origine thermique susceptibles de fragiliser la tenue mécanique des éléments de la cellule.

Dans le but de préserver la durée de vie de la cellule électrochimique, le document FR2976732 décrit une réalisation de cellule électrochimique permettant d'obtenir un échauffement local homogène au sein de la cellule en fonctionnement. L'échauffement dépend de la densité de courant électrique en chaque point de la cellule qui est elle-même fonction de la pression partielle d'espèce réactive. En effet, considérant ici le côté cathodique de la cellule, la quantité d'oxygène contenu dans le gaz circulant dans le circuit de distribution diminue progressivement à mesure que l'oxygène est consommé par la cellule, ce qui entraîne une variation spatiale de la densité de courant électrique produit par la cellule, et donc une variation spatiale de l'échauffement de la cellule. Pour éviter cette inhomogénéité spatiale de l'échauffement de la cellule, la conductivité électrique entre la plaque bipolaire amenant l'oxygène et la cellule est ajustée localement de manière à compenser la diminution de la pression partielle d'oxygène.

Dans le document WO2007/032903, la durée de vie d'une cellule électrochimique est préservée par l'utilisation d'une couche active dont la répartition spatiale d'activité catalytique permet d'obtenir une distribution spatiale uniforme de la densité de courant, qui, en retour, se traduit par à une distribution spatiale uniforme de la température de la cellule en fonctionnement. En particulier, ce document décrit une répartition spatiale d'activité catalytique qui varie entre l'entrée et la sortie des circuits de distribution des espèces réactives. Le document US 2009/024373 A1 décrit une méthode d'optimisation de la distribution spatiale de la perméabilité d'une couche de diffusion d'une pile à combustible. La méthode met en oeuvre un modèle multi-dimensionnel de pile à combustible utilisant la mécanique des fluides numérique.

Le document WO 2013/088122 A1 enseigne que la performance d'une pile à combustible peut être améliorée lorsque une distribution spatiale de la perméabilité d'une couche de diffusion de la pile à combustible est optimisée afin de permettre l'obtention d'une distribution de température uniforme pour la pile en fonctionnement.

L'article "Effective permeability of gas diffusion layer in proton exchange membrane fuel cells" de SHOU DAHUA ET AL (INTERNATIONAL JOURNAL OF HYDROGEN ENERGY, vol. 38, no. 25, 15 juillet 2013, pages 10519-10526, XP028687547) discute de l'importance et de la modélisation de la perméabilité effective des couches de diffusion gazeuse dans les piles à combustibles à membrane échangeuse de protons.

## EXPOSÉ DE L'INVENTION

L'invention a pour objectif de remédier au moins en partie aux inconvénients de l'art antérieur, et plus particulièrement de proposer un procédé de détermination de la distribution spatiale d'un paramètre représentatif de la perméabilité d'une électrode de cellule électrochimique permettant notamment d'homogénéiser la température locale de la cellule électrochimique en fonctionnement et ainsi de préserver la durée de vie de cette dernière.

L'invention propose à cet effet un procédé de détermination d'une distribution spatiale d'un paramètre d'intérêt représentatif d'une perméabilité d'une couche de diffusion d'au moins une électrode d'une cellule électrochimique, ladite cellule comportant deux électrodes séparées l'une de l'autre par un électrolyte et disposées entre deux plaques bipolaires adaptées à amener des espèces réactives aux électrodes et à évacuer de la chaleur produite par la cellule en fonctionnement, au moins une électrode comportant une couche de diffusion adaptée à assurer la diffusion d'espèce réactive jusqu'à l'électrolyte, ledit procédé comprenant les étapes suivantes :

> i) fourniture d'une cellule électrochimique au sein de laquelle le paramètre d'intérêt est réparti selon une distribution spatiale initiale, pour laquelle la distribution spatiale d'une température au sein de la cellule électrochimique en fonctionnement présente au moins une valeur locale supérieure ou égale à une valeur locale maximale prédéterminée ;
> ii) définition d'une distribution spatiale d'une température de consigne au sein de ladite cellule électrochimique en fonctionnement, telle que les valeurs locales de température sont inférieures à des valeurs locales maximales prédéterminées ;
> iii) mesure d'une distribution spatiale d'une première grandeur thermique représentative de l'évacuation de la chaleur au sein de ladite cellule électrochimique en fonctionnement ;
> iv) estimation d'une distribution spatiale d'une seconde grandeur thermique représentative de la production locale de chaleur au sein de ladite cellule électrochimique en fonctionnement, en fonction de ladite distribution spatiale de la température de consigne et de ladite distribution spatiale mesurée de la première grandeur thermique, de sorte que la distribution spatiale de température de ladite cellule électrochimique en fonctionnement, dont la première grandeur thermique présente ladite distribution spatiale mesurée et la seconde grandeur thermique présente ladite distribution spatiale estimée, soit sensiblement égale à celle de la température de consigne ;
> v) détermination d'une distribution spatiale du paramètre d'intérêt en fonction de la distribution spatiale estimée de la seconde grandeur thermique.

On obtient ainsi une distribution spatiale du paramètre d'intérêt, dont la prise en compte dans la cellule électrochimique considérée, permet à celle-ci, en fonctionnement, de présenter une distribution spatiale de température correspondant sensiblement à celle de la température de consigne. On évite ainsi que la cellule électrochimique en fonctionnement présente alors des zones dans lesquelles la température serait localement supérieure à des valeurs locales maximales prédéterminées.

La perméabilité correspond ici à la perméabilité au travers du plan de la couche de diffusion et non pas à la perméabilité dans le plan de la couche.

La fourniture de la cellule électrochimique peut comporter une phase de réalisation expérimentale ou de modélisation numérique d'une cellule électrochimique, une phase de mesure de la distribution spatiale de la température au sein de la cellule électrochimique en fonctionnement, puis une phase de comparaison de la distribution spatiale mesurée de la température vis-à-vis d'une distribution spatiale prédéterminée d'une température maximale. Les valeurs locales de cette distribution spatiale de température maximale sont dites valeurs locales maximales prédéterminées. Lorsqu'au moins une valeur locale de la température mesurée est supérieure ou égale à une valeur locale maximale prédéterminée correspondante, c'est-à-dire pour la même position au sein de la distribution spatiale, la cellule électrochimique est alors fournie, c'est-à-dire considérée, pour les étapes suivantes du procédé de détermination.

La définition de la température de consigne peut être effectuée de sorte que les valeurs locales de température sont inférieures aux valeurs locales maximales correspondantes. La température de consigne peut présenter des valeurs locales sensiblement constantes, voire un gradient local de température sensiblement constant. Elle peut présenter des valeurs locales non constantes au sein de la distribution spatiale, qui restent inférieures à ces valeurs maximales prédéterminées. Elle peut également présenter un gradient local non constant au sein de la distribution spatiale, qui reste inférieur à des valeurs maximales prédéterminées.

La mesure de la distribution spatiale de la première grandeur thermique peut être une mesure expérimentale effectuée sur la cellule électrochimique considérée préalablement fabriquée, ou une mesure numérique effectuée sur un modèle numérique de la cellule électrochimique considérée. La première grandeur thermique peut être le débit local de fluide caloporteur parcourant un circuit de refroidissement d'une plaque bipolaire.

L'estimation de la distribution spatiale de la seconde grandeur thermique peut comporter :

- une phase de réalisation d'un maillage, par exemple bidimensionnel ou tridimensionnel, d'un circuit de refroidissement d'au moins une plaque bipolaire de la cellule électrochimique dans lequel est destiné à s'écouler un fluide caloporteur, et
- une phase de simulation numérique par ordinateur de la seconde grandeur thermique, sur ledit maillage, par résolution d'un modèle numérique discret exprimant la seconde grandeur thermique en fonction de la température locale et de la première grandeur thermique.

Dans ce cas, le modèle numérique prend en compte la distribution spatiale de la température de consigne et la distribution spatiale préalablement mesurée de la première grandeur thermique. Le modèle numérique discret, dit électrochimique, peut être une relation exprimant un paramètre représentatif de la production locale de chaleur, par exemple le flux local de chaleur, en fonction de la température locale et d'un paramètre représentatif de l'évacuation locale de chaleur, par exemple le débit local du fluide caloporteur.

Ainsi, la cellule électrochimique, dont la distribution spatiale du paramètre d'intérêt a été obtenue par le procédé de détermination, présente en fonctionnement une distribution spatiale de température sensiblement égale à celle de la température de consigne. On évite ainsi la génération de nouveaux points chauds ou nouvelles inhomogénéités de température, non voulus, qui pourraient apparaître si la distribution spatiale du paramètre d'intérêt était déterminée par une approche essentiellement thermique, c'est-à-dire sur la base d'une comparaison de la température réelle qui présente des points chauds ou inhomogénéités, et de la température de consigne.

De préférence, les plaques bipolaires sont formées de deux tôles accolées l'une à l'autre, chaque tôle comportant des bossages formant au niveau d'une face dite externe un circuit de distribution d'une espèce réactive, les bossages des tôles formant ensemble, au niveau de faces dites internes opposées aux faces externes, un circuit de refroidissement comportant des canaux de refroidissement qui communiquent fluidiquement entre eux entre une entrée et une sortie du circuit de refroidissement. Les faces externes des tôles sont orientées vers une électrode de cellule électrochimique. Les canaux de refroidissement communiquent fluidiquement entre eux dans le sens où, entre l'entrée et la sortie du circuit de refroidissement, ils forment un réseau fluidique bidimensionnel, c'est-à-dire non linéaire.

De préférence, l'étape de détermination de la distribution spatiale du paramètre d'intérêt est effectuée en fonction, également, d'une valeur prédéterminée d'un paramètre représentatif de la puissance électrique globale de la cellule électrochimique. Le paramètre peut être la puissance électrique globale, à savoir le produit de la tension et de la densité de courant mesurées aux bornes de la cellule, voire le rendement de celle-ci, par exemple la tension de la cellule pour une densité de courant donnée. Il est alors possible de gérer à la fois la température locale au sein de la cellule électrochimique, dans le but d'en optimiser la durée de vie, tout en maintenant une puissance électrique voulue.

La première grandeur thermique est de préférence une température locale effective mesurée au sein de la cellule en fonctionnement, et la seconde grandeur thermique est alors une grandeur représentative d'un écart local entre la température effective et la température de consigne.

De préférence, l'étape v) comporte :

- une sous-étape de calcul d'une distribution spatiale d'un coefficient correcteur à partir de la distribution spatiale de la seconde grandeur thermique ;
- une sous-étape dans laquelle on détermine la distribution spatiale du paramètre d'intérêt par corrélation de la distribution spatiale initiale du paramètre d'intérêt avec la distribution spatiale du coefficient correcteur.

De préférence, l'étape v) comporte :

- une sous-étape dans laquelle on identifie au moins une zone Zi de la cellule où la seconde grandeur thermique présente une valeur locale estimée supérieure à une valeur seuil prédéterminée ;
- une sous-étape dans laquelle on détermine la distribution spatiale du paramètre d'intérêt par modification de la distribution spatiale initiale dans la zone Zi identifiée, en fonction de la valeur locale estimée de la seconde grandeur thermique dans cette zone.

De préférence, la première grandeur thermique est représentative de l'évacuation locale de la chaleur produite par la cellule en fonctionnement, et la seconde grandeur thermique est représentative de la production locale de chaleur par la cellule en fonctionnement.

De préférence, la première grandeurthermique est le débit local effectif mesuré d'un fluide caloporteur circulant dans un circuit de refroidissement d'une plaque bipolaire de la cellule, et la seconde grandeur thermique est le flux local de chaleur produite par la cellule en fonctionnement.

De préférence, l'étape v) comporte :

- une première sous-étape dans laquelle on estime une distribution spatiale de la densité d'un signal électrique produit par la cellule en fonctionnement, à partir de ladite distribution spatiale estimée du flux de chaleur produite, et
- une deuxième sous-étape dans laquelle on détermine la distribution spatiale du paramètre d'intérêt à partir de ladite distribution spatiale de la densité du signal électrique.

L'invention porte également sur un procédé de réalisation d'une électrode de cellule électrochimique, comportant les étapes dans lesquelles :

- on considère une cellule électrochimique de référence comportant deux électrodes séparées l'une de l'autre par un électrolyte et disposées entre deux plaques bipolaires adaptées à amener des espèces réactives aux électrodes et à évacuer de la chaleur produite par la cellule en fonctionnement, au moins une électrode comportant une couche de diffusion adaptée à assurer la diffusion d'espèce réactive jusqu'à l'électrolyte, la couche de diffusion présentant un paramètre d'intérêt représentatif d'une perméabilité répartie spatialement selon une distribution initiale ;
- on détermine, par le procédé de détermination selon l'une quelconque des caractéristiques précédentes, une distribution spatiale du paramètre de perméabilité ;
- on réalise ladite électrode de sorte que le paramètre de perméabilité de la couche de diffusion de celle-ci présente la distribution spatiale déterminée.

L'étape de réalisation de ladite électrode peut comporter le dépôt d'un produit de colmatage dans au moins une zone de la couche de diffusion préalablement identifiée à partir de ladite distribution spatiale déterminée du paramètre de perméabilité.

Le produit de colmatage déposé peut être adapté à diminuer une porosité de la couche de diffusion dans ladite zone.

Le produit de colmatage peut être déposé par sérigraphie au moyen d'un écran de sérigraphie comportant une pluralité d'ouvertures obturées hors de ladite zone.

L'invention porte également sur une électrode de cellule électrochimique comportant une couche de diffusion et une couche active située sur une première face de la couche de diffusion, la couche de diffusion étant adaptée à assurer la diffusion fluidique entre la couche active et une seconde face opposée à la première, caractérisée en ce qu'elle présente un paramètre représentatif d'une perméabilité de la couche de diffusion qui présente une valeur locale variable sur la surface de l'électrode.

Le paramètre représentatif de la perméabilité de la couche de diffusion peut être la porosité de celle-ci, la couche de diffusion présentant une valeur locale de porosité dans au moins une zone de la couche inférieure à la valeur moyenne de la porosité hors de ladite zone.

La couche de diffusion peut comporter un produit de colmatage dans au moins une zone de la couche, adapté à diminuer localement la porosité de la couche.

L'invention porte également sur un procédé de réalisation d'une cellule électrochimique, comportant les étapes suivantes :

- on considère une cellule électrochimique de référence comportant deux électrodes séparées l'une de l'autre par un électrolyte et disposées entre deux plaques bipolaires adaptées à amener des espèces réactives aux électrodes et à évacuer de la chaleur produite par la cellule en fonctionnement, au moins une électrode comportant une couche de diffusion adaptée à assurer la diffusion d'espèce réactive jusqu'à l'électrolyte, la couche de diffusion présentant un paramètre d'intérêt représentatif d'une perméabilité répartie spatialement selon une distribution initiale ;
- on détermine, par le procédé de détermination selon l'une quelconque des caractéristiques précédentes, une distribution spatiale du paramètre d'intérêt ;
- on réalise la cellule électrochimique sur la base de la cellule électrochimique de référence dans laquelle le paramètre d'intérêt présente la distribution spatiale déterminée.

Par sur la base de, on entend que la cellule électrochimique réalisée présente les mêmes propriétés électrochimiques que celles de la cellule de référence, hormis le paramètre d'intérêt qui est réparti selon la distribution spatiale déterminée. La cellule électrochimique réalisée peut être la cellule de référence dans laquelle la distribution spatiale initiale du paramètre d'intérêt a été modifiée pour être sensiblement égale à la distribution spatiale déterminée.

L'invention porte également sur un support d'enregistrement, comportant des instructions pour la mise en oeuvre du procédé de détermination selon l'une quelconque des caractéristiques précédentes, ces instructions étant aptes à être exécutées par un processeur.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1a est une représentation schématique en coupe d'un exemple de cellule électrochimique, et la figure 1b est une représentation schématique illustrant la relation de corrélation entre la distribution spatiale de la production de chaleur et la distribution spatiale d'évacuation de chaleur dont résulte la distribution spatiale de température de la cellule électrochimique en fonctionnement ;

la figure 2 est un organigramme d'un procédé de détermination de la distribution spatiale de la résistance électrique de la cellule électrochimique selon un premier mode de réalisation ;

la figure 3 est un organigramme d'un procédé de détermination de la distribution spatiale de la résistance électrique de la cellule électrochimique selon un deuxième mode de réalisation ;

la figure 4 est un exemple de maillage du circuit de refroidissement où chaque maille comporte un terme de production locale de chaleur $Q_{i,j}^e$, un terme d'évacuation locale de chaleur $D_{i,j}^r$, et une température $T_{i,j}^c$ ;

la figure 5a est un exemple de distribution spatiale de la température effective d'une cellule électrochimique de référence en fonctionnement pour laquelle la perméabilité des couches de diffusion des électrodes est spatialement uniforme, et la figure 5b est un exemple de distribution spatiale de la température effective de la cellule électrochimique pour laquelle la perméabilité des couches de diffusion présente une distribution spatiale déterminée selon le procédé du premier mode de réalisation.

## EXPOSÉ DÉTAILLÉ DE MODES DE RÉALISATION PARTICULIERS

Sur les figures et dans la suite de la description, les mêmes références représentent des éléments identiques ou similaires. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près.

On décrira différents modes de réalisation et variante en référence à une pile à combustible, et en particulier à une pile à hydrogène de type PEM (pour *Proton Exchange Membrane,* en anglais) dont la cathode est alimentée en oxygène et l'anode en hydrogène. L'invention s'applique cependant à tout type de pile à combustible, en particulier à celles fonctionnant à basse température, c'est-à-dire à une température inférieure à 200°C, ainsi qu'aux électrolyseurs électrochimiques.

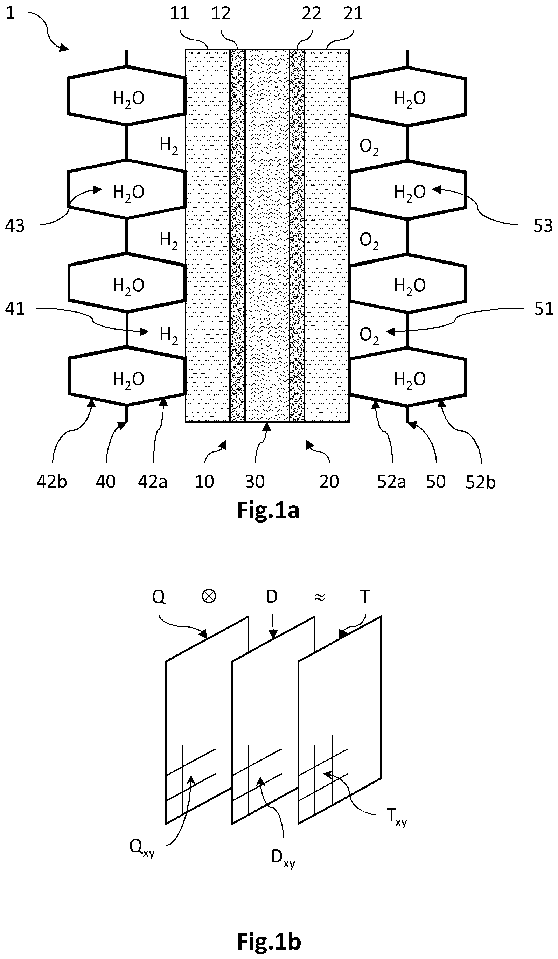

La figure 1a illustre de manière partielle et schématique un exemple de cellule électrochimique 1 appartenant à un empilement de cellules d'une pile à combustible de type PEM. La cellule 1 comporte une anode 10 et une cathode 20 séparées l'une de l'autre par un électrolyte comprenant ici une membrane polymère 30, les électrodes 10, 20 étant disposées entre deux plaques bipolaires 40, 50 adaptées à amener des espèces réactives aux électrodes et à évacuer la chaleur produite lors de la réaction électrochimique.

Les plaques bipolaires comportent un circuit de distribution d'hydrogène 41 situé sur une face anodique et un circuit de distribution d'oxygène 51 situé sur une face cathodique. Elles sont ici formées de deux tôles métalliques 42a, 42b ; 52a, 52b, assemblées l'une à l'autre par des zones ou points de soudure, et sont embouties de manière à former les circuits de distribution. L'agencement des bossages permet de réaliser également un circuit de refroidissement 43, 53 à l'intérieur des plaques assurant l'écoulement d'un fluide caloporteur sans que celui-ci ne vienne au contact des électrodes. D'autres technologies de plaque bipolaire peuvent être utilisées, par exemple les plaques réalisées en matériau composite chargé par exemple de graphite, dont les bossages sont réalisés par moulage.

Chaque électrode 10, 20 comporte une couche de diffusion 11, 21 (GDL, pour *Gas Diffusion Layer,* en anglais) disposée au contact de l'une des plaques bipolaires 40, 50 et une couche active 12, 22 située entre la membrane 30 et la couche de diffusion 11, 21. Les couches actives 12, 22 sont le lieu des réactions électrochimiques. Elles comportent des matériaux permettant les réactions d'oxydation et de réduction aux interfaces respectives de l'anode et la cathode avec la membrane. Plus précisément, elles peuvent comporter un catalyseur, par exemple des particules de platine, disposé sur un support électriquement conducteur, par exemple une matrice carbonée, et un ionomère assurant la conductivité protonique, par exemple du Nafion. Les couches de diffusion 11, 21 sont réalisées en matériau poreux autorisant la diffusion des espèces réactives à partir du circuit de distribution des plaques bipolaires jusqu'aux couches actives, ainsi que la diffusion des produits issus de la réaction électrochimique jusqu'au même circuit de distribution. Elles présentent une porosité $\phi$ donnée qui définit une perméabilité k.

La porosité $\phi$ d'une couche de diffusion se définit comme le rapport entre le volume des pores du matériau poreux sur le volume total du matériau. Elle est habituellement comprise entre 10% et 90%, et est généralement de l'ordre de 80%. La perméabilité k traduit la capacité de la couche à se laisser traverser par un fluide sous l'effet d'un gradient de pression, tel que l'exprime la loi de Darcy :

$$\overrightarrow{\nabla P} = -\frac{\mu}{k} \vec{U} \tag{1}$$

où $\overrightarrow{\nabla P}$ est le gradient de pression, $\mu$ la viscosité du fluide, k la perméabilité de la couche de diffusion et $\vec{U}$ la vitesse de Darcy qui dépend du débit et de l'aire d'une section perpendiculaire au flux.

La figure 1b représente schématiquement la distribution spatiale de température T de la cellule électrochimique comme résultant d'une relation de corrélation entre la distribution spatiale d'un terme source de production de chaleur, autrement dit d'une grandeur représentative de la production de chaleur par la cellule, tel que le flux de chaleur produite Q, et la distribution spatiale d'une grandeur représentative de l'évacuation de la chaleur produite, par exemple le débit massique D du fluide caloporteur dans le circuit de refroidissement.

Ainsi, contrairement à l'enseignement du document relatif à l'art antérieur cité précédemment, homogénéiser la distribution de production de chaleur Q et donc celle de l'échauffement de la cellule ne peut suffire à obtenir l'homogénéisation de la distribution de température T effective de la cellule. En effet, il importe de tenir compte à la fois de la présence éventuelle d'inhomogénéités locales dans le terme Q de production de chaleur ainsi que de la présence éventuelle d'inhomogénéités locales dans le terme D d'évacuation de chaleur.

La production locale de chaleur, ou plus précisément le flux local de chaleur produite Q, est directement proportionnelle à la production locale d'énergie électrique, ou plus précisément à la densité locale de courant I, comme l'exprime la relation entre les distributions spatiales respectives :

$$Q_{x,y} = I_{x,y} \left( \Delta H/2F - U_{x,y} \right) \tag{2}$$

où $\Delta H$ est l'enthalpie de la réaction électrochimique, F la constante de Faraday, et $U_{x,y}$ la distribution spatiale de la tension locale de la cellule, l'enthalpie et la tension pouvant être considérées comme quasiment homogènes en tout point de la cellule. Ainsi, la production de chaleur est impactée par toute inhomogénéité qui provient de paramètres fluidiques (dimensionnement des circuits de distribution des espèces réactives...), électrochimiques (propriétés locales des électrodes et de la membrane...), mais également électriques (résistances électriques des différents éléments de la cellule, par exemple résistivités des matériaux et résistances de contact entre les éléments de la cellule...), qui tous influent sur la distribution de densité de courant.

L'évacuation de chaleur par l'écoulement du fluide caloporteur peut également présenter des inhomogénéités locales qui proviennent notamment de pertes de charge singulières dans le circuit de refroidissement. Ces pertes de charge sont issues du dimensionnement du circuit de refroidissement lors de la réalisation des plaques bipolaires, et peuvent se traduire par la formation de zones à fort débit ou à faible débit au sein du circuit de refroidissement.

Dans le cadre de l'invention, on cherche à adapter la distribution spatiale d'un paramètre d'intérêt influençant la production d'énergie électrique, et donc d'énergie thermique, pour que la distribution spatiale de la température effective de la cellule en fonctionnement corresponde à celle d'une température de consigne, en tenant compte de la distribution spatiale de l'évacuation effective de chaleur que présente la cellule électrochimique.

Le paramètre influençant la production d'énergie électrique est ici un paramètre représentatif de la perméabilité de la couche de diffusion d'au moins une électrode de la cellule électrochimique. La valeur de ce paramètre d'intérêt influe localement sur la densité de courant $I_{x,y}$ dans la mesure où elle détermine la quantité d'espèce réactive susceptible de diffuser localement jusqu'à la couche active. Le paramètre d'intérêt peut ainsi être la perméabilité k, définie comme la capacité d'un milieu poreux à être traversé par un fluide sous l'effet d'un gradient de pression, qui s'exprime en Darcy ou en $m^2$. Il peut également s'agir de tout paramètre équivalent, tel que la porosité $\phi$, un coefficient de perméabilité K défini comme étant le rapport entre la perméabilité k et la viscosité $\mu$ du fluide, ou un coefficient de diffusion fluidique.

A noter que la relation entre la perméabilité et la porosité est exprimée notamment par l'équation de Kozeny-Carman (voir par exemple Feser et al., Experimental characterization of in-plane permeability of gas duffusion loyers, Journal of Power Sources, 162 :1226-1231, 2006). On comprend ici que, plus la perméabilité locale est faible, du fait par exemple d'une faible porosité, plus la vitesse des espèces réactives au travers de la couche de diffusion est faible et donc la quantité d'espèces réactives susceptibles d'atteindre la couche active également. Cela se traduit par une diminution de la densité locale de courant échangé par la cellule et donc de flux local de chaleur produite. A l'inverse, plus la perméabilité locale est élevée, du fait notamment d'une porosité élevée, plus la vitesse et donc la quantité d'espèces réactives susceptible d'atteindre la couche active sont importantes. Cela entraîne donc une augmentation de la densité locale de courant échangée par la cellule et donc de flux local de chaleur produite.

Par température de la cellule, on entend la température locale, c'est-à-dire la distribution spatiale de température de l'un ou l'autre des éléments de la cellule, par exemple de l'une des plaques bipolaires voire de l'une des électrodes. La température de la cellule peut ainsi correspondre à la distribution spatiale de température du fluide caloporteur dans le circuit de refroidissement. La température effective de la cellule est la distribution spatiale de température de la cellule en fonctionnement, au point de polarisation définie par la tension de la cellule $U_{tot}$ et le courant $I_{tot}$, c'est-à-dire la densité locale de courant $I_{x,y}$ intégrée sur toute la surface de la cellule.

Par paramètre représentatif de l'évacuation de chaleur, on entend un paramètre dont la valeur traduit la capacité de la cellule à évacuer localement la chaleur produite. Il peut s'agir en particulier du débit local, massique ou volumique, du fluide caloporteur circulant dans le circuit de refroidissement.

Par distribution spatiale d'un paramètre, on entend la valeur locale de ce paramètre en tout point de la cellule, ou plus précisément, en tout point $(x,y)$ d'un plan parallèle à la cellule, au niveau de la zone dite active correspondant à l'étendue surfacique des couches actives des électrodes.

Ainsi, la cellule électrochimique dont la perméabilité serait répartie spatialement selon la distribution ainsi déterminée présenterait une température effective, ou température lors du fonctionnement de la cellule, sensiblement identique à la température de consigne. Cette température de consigne présente avantageusement une distribution spatiale sensiblement homogène, en scalaire ou en gradient. Par homogène en scalaire, on entend que la valeur locale de la température est sensiblement constante. Par homogène en gradient, on entend que le gradient local de température est sensiblement constant. Les valeurs locales de température peuvent cependant être non constantes tout en restant inférieures à des valeurs locales maximales prédéterminées. La cellule ne présente alors pas de zones de sur-température, ou points chauds, qui d'une part peuvent augmenter la cinétique des réactions de dégradation des éléments de la cellule et d'autre part peuvent générer des contraintes mécaniques susceptibles de dégrader la tenue mécanique des éléments de la cellule. La durée de vie de la cellule électrochimique est alors préservée. Par point chaud, on entend par exemple une zone de la cellule qui prend un pic de température ou un pic de gradient de température. Plus précisément, un point chaud peut être une zone où l'écart entre la température locale et la température d'entrée du circuit de refroidissement est supérieur au produit d'un coefficient et de l'écart de température entre l'entrée et la sortie du circuit de refroidissement, le coefficient pouvant être de l'ordre de 1.2 à 3 voire davantage, et est de préférence de l'ordre de 1.5. A titre d'exemple, pour une température de 77°C à l'entrée du circuit de refroidissement et de 80°C à la sortie du circuit, et pour un coefficient égal à 1.5, un point chaud est une zone de la cellule où la température locale excède 81.5°C.

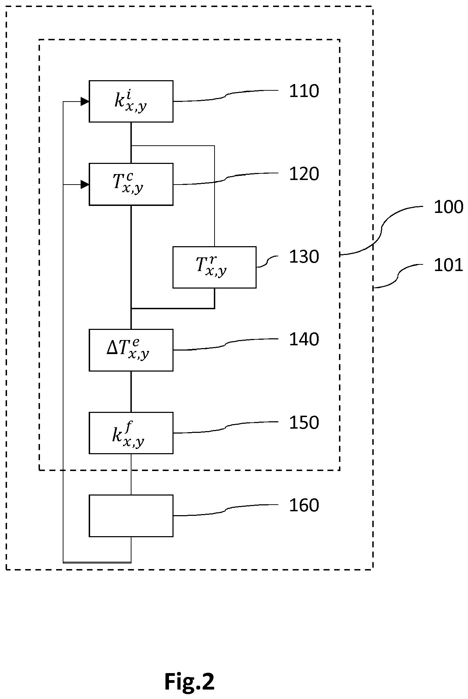

La figure 2 est un organigramme d'un procédé de détermination de la distribution spatiale du paramètre d'intérêt représentatif de la perméabilité d'une électrode, selon un premier mode de réalisation. Dans cet exemple, le paramètre d'intérêt est la perméabilité $k$ d'une couche de diffusion d'une électrode de la cellule, par exemple la couche de diffusion cathodique, dont la valeur $k_{x,y}$ influe directement sur la densité locale de courant électrique $I_{x,y}$ localement échangé lors de la réaction électrochimique et donc sur le flux local de chaleur produite $Q_{x,y}$.

D'une manière générale, selon ce premier mode de réalisation, on détermine une distribution spatiale optimisée $k_{x,y}^{f}$ de la perméabilité $k$ à partir de l'estimation de la distribution spatiale $\Delta T_{x,y}^{e}$ d'un écart $\Delta T^{e}$ entre une température effective $T^{r}$ de la cellule en fonctionnement dans laquelle la perméabilité est répartie spatialement selon une distribution initiale donnée, et une température de consigne $T^{c}$ prédéterminée. On est alors en mesure de modifier la perméabilité $k$ de la couche de diffusion pour qu'elle présente la distribution optimisée $k_{x,y}^{f}$, de manière à ce que la température effective $T^{r}$ de la cellule modifiée soit sensiblement égale à la température de consigne $T^{c}$.

Lors d'une première étape 110, on définit une cellule électrochimique de référence au sein de laquelle la perméabilité $k$ de la couche de diffusion cathodique est répartie spatialement selon une distribution initiale $k_{x,y}^{i}$. La cellule présente une structure identique ou similaire à celle décrite en référence à la figure 1. La distribution spatiale initiale $k_{x,y}^{i}$ de la perméabilité k peut être sensiblement homogène, c'est-à-dire ici qu'elle présente une valeur sensiblement constante en tout point de la zone active.

Lors d'une étape 120, on définit une distribution spatiale $T_{x,y}^c$ d'une température de consigne $T^c$ de la cellule de référence lorsque celle-ci est en fonctionnement et produit une densité totale de courant $I_{tot}$ pour une tension $U_{tot}$ donnée. Au premier ordre, la température de consigne $T^c$ de la cellule peut correspondre à une température du fluide caloporteur au sein du circuit de refroidissement, la distribution de cette température dépendant alors notamment des valeurs en entrée $T_e^c$ et en sortie $T_s^c$ du circuit de refroidissement. A titre illustratif, la température d'entrée peut être fixée préalablement, par exemple à 75°C, et la température de sortie peut être estimée à partir de la puissance thermique $P_{th}$ à évacuer, celle-ci correspondant à la puissance électrique $P_e = I_{tot}.U_{tot}$ délivrée lors du fonctionnement de la cellule. La puissance thermique $P_{th}$ est estimée à partir de l'intégration sur la zone active du flux local de chaleur produite $Q_{x,y}$ obtenu à partir de la relation (2). L'estimation de la température de sortie $T_s^c$ est ensuite obtenue par corrélation de la puissance thermique $P_{th}$ estimée précédemment avec le débit total moyen <Dtot> du liquide caloporteur dans le circuit de refroidissement, moyennant la capacité thermique $c_p$ du fluide caloporteur. On peut ensuite définir la distribution spatiale $T_{x,y}^c$ de la température de consigne $T^c$ à partir des valeurs de température du fluide caloporteur en entrée $T_e^c$ et en sortie $T_s^c$ du circuit de refroidissement, la distribution $T_{x,y}^c$ étant avantageusement homogène en gradient, c'est-à-dire que le gradient local de température de consigne est sensiblement constant.

Lors d'une étape 130, on obtient une distribution spatiale $T_{x,y}^r$ d'une première grandeur thermique représentative de la température de la cellule en fonctionnement. La première grandeur thermique est ici la température effective $T^r$ de la cellule électrochimique lorsqu'elle est en fonctionnement dans les mêmes conditions opératoires que celles considérées dans l'étape 120. Cette distribution $T_{x,y}^r$ n'est pas estimée mais est issue d'une mesure par des moyens expérimentaux ou numériques. Elle peut ainsi être obtenue par mesure expérimentale au sein d'une cellule électrochimique présentant les mêmes propriétés que la cellule de référence définie lors de l'étape 110, par exemple au moyen d'une carte S++ commercialisée par la société « S++ Simulation Services » comportant une plaque invasive insérée entre deux plaques bipolaires et adaptée à mesurer une distribution spatiale de température. La distribution $T_{x,y}^r$ de température effective peut également être obtenue par simulation numérique à partir d'un modèle électrochimique de cellule, par exemple celui décrit dans la publication de Robin et al., Development and experimental validation of a PEM fuel cell 2D model to study heterogeneities effects along large area cell suface, International Journal of Hydrogen, 40, 2015, 10211-10230, ou encore le modèle décrit dans la publication d'Inoue et al. Numerical analysis of relative humidity distribution in polymer electrolyte fuel cell stock including cooling water, J. Power Sources 162 (2006) 81-93.

La distribution $T_{x,y}^r$ de la température effective $T^r$ obtenue par mesure expérimentale ou numérique prend ainsi en compte les inhomogénéités locales du flux de chaleur produite qui dépend de la densité locale de courant, ainsi que celles de l'évacuation de chaleur qui dépend notamment du débit local du fluide caloporteur dans le circuit de refroidissement. Lors d'une étape 140, on estime la distribution spatiale d'une seconde grandeur thermique, ici une grandeur $\Delta T^e$ représentative d'un écart local entre la température effective $T^r$ et la température de consigne $T^c$. L'estimation de cette grandeur d'écart local $\Delta T^e$ est calculée à partir de la distribution spatiale $T_{x,y}^c$ de la température de consigne $T^c$ définie lors de l'étape 120 et de la distribution spatiale $T_{x,y'}^r$ de la température effective $T^r$ mesurée lors de l'étape 130. Il peut s'agir de la différence entre la valeur locale de la température effective et celle de la température de consigne, ou d'un rapport entre ces valeurs, ou autre. On considère ici la différence termes à termes entre les distributions de la température effective et de la température de consigne :

$$\Delta T_{x,y}^e = T_{x,y}^r - T_{x,y}^c.$$

Lors d'une étape 150, on détermine ensuite la distribution spatiale $k_{x,y}^f$ du paramètre d'intérêt k de perméabilité en fonction de la distribution spatiale $\Delta T_{x,y}^e$ de l'écart local $\Delta T^e$.

Selon une première variante, on calcule tout d'abord un coefficient correcteur dont la distribution spatiale est proportionnelle termes à termes à celle $\Delta T^e_{x,y}$ de l'écart local $\Delta T^e$. A titre d'exemple, le coefficient correcteur varie continûment entre une valeur minimale et une valeur maximale à mesure que l'écart local varie respectivement entre une valeur sensiblement nulle à une valeur maximale. La valeur minimale du coefficient correcteur peut être ici sensiblement comprise entre 0 et 0.75, voire entre 0 et 0.5, et par exemple être sensiblement égale à 0, 0.1, 0.2, 0.3, et la valeur maximale peut être sensiblement égale à l'unité. On peut ensuite déterminer la distribution spatiale $k^f_{x,y}$ de la perméabilité k par corrélation, par exemple une multiplication termes à termes, de la distribution spatiale initiale $k^i_{x,y}$ de la perméabilité k avec la distribution spatiale du coefficient correcteur. Ainsi, dans les zones de la cellule où l'écart $\Delta T^e$ entre la température effective et la température de consigne présente une valeur maximale, c'est-à-dire dans les zones dites de points chauds, la valeur locale initiale $k^i_{x,y}$ de la perméabilité k est multipliée par la valeur locale du coefficient correcteur, par exemple égale à 0.25, voire moins. Ainsi, la perméabilité présente une nouvelle valeur locale diminuée par rapport à la valeur locale initiale, qui réduit la quantité d'espèces réactives susceptibles de diffuser jusqu'à la couche active, ce qui conduit à une densité locale de courant et donc à un flux de chaleur produite diminué.

Selon une deuxième variante, on identifie tout d'abord au moins une zone $Z_i$ de la cellule dans laquelle l'écart $\Delta T^e$ présente une valeur supérieure à une valeur seuil prédéterminée, la valeur seuil étant par exemple représentative d'un point chaud. On détermine ensuite la distribution spatiale $k^f_{x,y}$ de la perméabilité k par modification de la distribution spatiale initiale $k^i_{x,y}$ dans la zone $Z_i$ identifiée en fonction de la valeur locale de l'écart $\Delta T^e$ dans cette zone. A titre d'exemple, la distribution spatiale initiale $k^i_{x,y}$ peut être localement modifiée à partir d'un coefficient correcteur dont la valeur est proportionnelle à celle de l'écart $\Delta T^e$ dans cette zone. Comme dans la première variante, le coefficient correcteur varie continûment entre une valeur minimale et une valeur maximale, par exemple entre 0.25 et 1.

On obtient ainsi une distribution spatiale $k^f_{x,y}$ de la perméabilité k de la couche de diffusion. On est alors en mesure de modifier la distribution initiale $k^i_{x,y}$ de la perméabilité k de la couche de diffusion de la cathode de la cellule de référence pour qu'elle présente la nouvelle distribution déterminée lors de l'étape 150. La cellule ainsi optimisée présente alors, en fonctionnement, une température effective dont la distribution spatiale est sensiblement égale à celle de la température de consigne. Dans la mesure où la distribution de la température de consigne est avantageusement homogène, la cellule en fonctionnement présente une température effective dont la distribution est également sensiblement homogène, permettant ainsi de préserver la durée de vie de la cellule.

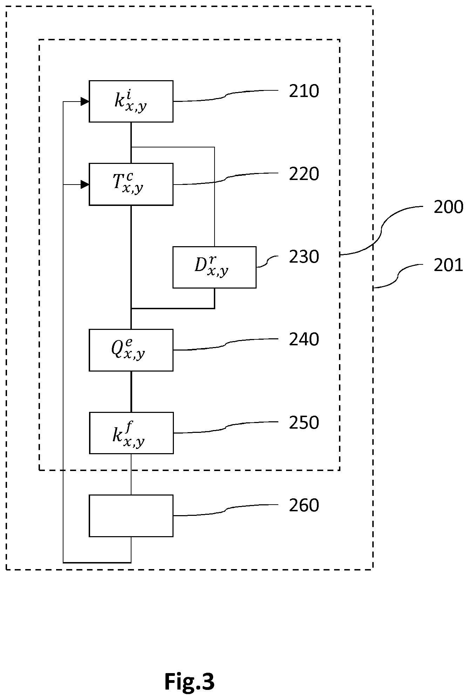

La figure 3 est un organigramme d'un procédé de détermination de la distribution spatiale d'un paramètre d'intérêt représentatif de la perméabilité d'une couche de diffusion d'au moins une électrode d'une cellule électrochimique, selon un deuxième mode de réalisation. Dans cet exemple, le paramètre d'intérêt est la perméabilité k de la couche de diffusion, ici de la cathode, dont la valeur influe directement sur la densité de courant électrique localement produit lors de la réaction électrochimique.

D'une manière générale, selon ce deuxième mode de réalisation, on détermine la distribution spatiale $k^f_{x,y}$ de la perméabilité k à partir de l'estimation de la distribution spatiale de la production de chaleur nécessaire pour obtenir la distribution spatiale d'une température de consigne, en tenant compte de la distribution spatiale d'une grandeur thermique représentative de l'évacuation effective de chaleur dans la cellule. On est alors en mesure de modifier la distribution initiale de la perméabilité de la couche de diffusion pour qu'elle présente une distribution spatiale optimisée, de manière à ce que la température effective soit alors sensiblement égale à la température de consigne. La cellule électrochimique, dont le paramètre d'intérêt est spatialement réparti selon la distribution optimisée, présente en fonctionnement une température sensiblement égale à la température de consigne. Il n'y a pas de formations de nouveaux points chauds ou nouvelles inhomogénéités de température non voulus.

Cette approche, dite électrochimique, et non plus essentiellement thermique, est particulièrement avantageuse lorsqu'au moins une plaque bipolaire de la cellule électrochimique, voire les deux plaques bipolaires, sont formées de tôles accolées l'une à l'autre et présentant des bossages qui définissent un circuit de refroidissement bidimensionnel. Les bossages de chaque tôle, au niveau des faces, dites externes, des tôles, c'est-à-dire des faces orientées vers une électrode, définissent un circuit de distribution pour les espèces réactives. Au niveau des faces internes, c'est-à-dire des faces opposées aux faces externes, les bossages forment un circuit de refroidissement dans lequel est destiné à circuler un fluide caloporteur. Le circuit de refroidissement est dit linéaire lorsque les canaux de refroidissement ne communiquent pas entre eux, c'est-à-dire que le fluide caloporteur, entre l'entrée et la sortie du circuit de refroidissement, ne peut sensiblement pas passer d'un canal de refroidissement à un autre. Le circuit de refroidissement est dit bidimensionnel lorsque les canaux de refroidissement communiquent entre eux, de manière à former un réseau fluidique bidimensionnel et non pas linéaire. C'est le cas notamment lorsque les canaux de distribution d'une tôle ne sont pas parallèles à ceux de l'autre tôle.

Lors d'une première étape 210, on définit, ou fournit, une cellule électrochimique de référence au sein de laquelle la perméabilité k de la couche de diffusion cathodique est répartie spatialement selon une distribution initiale $k_{x,y}^i$. La distribution spatiale initiale $k_{x,y}^i$ de la perméabilité k peut être sensiblement homogène en scalaire, de sorte que la valeur locale est sensiblement constante en tout point de la zone active. La cellule présente une structure identique ou similaire à celle décrite en référence à la figure 1 et cette étape est similaire ou identique à l'étape 110 décrite précédemment. La cellule électrochimique considérée présente alors, en fonctionnement, une distribution spatiale de température dont au moins une valeur locale est supérieure ou égale à une valeur locale maximale prédéterminée. Cette dernière peut être constante ou différente en fonction du point considéré de la cellule électrochimique. Cette étape peut comporter :

- une phase de réalisation expérimentale ou de modélisation numérique d'une cellule électrochimique,
- une phase de mesure de la distribution spatiale de la température au sein de la cellule électrochimique en fonctionnement, puis
- une phase de comparaison de la distribution spatiale mesurée de la température vis-à-vis d'une distribution spatiale prédéterminée d'une température maximale. Les valeurs locales de cette distribution spatiale de température maximale sont dites valeurs locales maximales prédéterminées.

Lorsqu'au moins une valeur locale de la température mesurée est supérieure ou égale à une valeur locale maximale prédéterminée correspondante, c'est-à-dire pour la même position au sein de la distribution spatiale, la cellule électrochimique est alors fournie, c'est-à-dire considérée, pour les étapes suivantes du procédé de détermination.

Lors d'une étape 220, on définit une distribution spatiale $T_{x,y}^c$ d'une température de consigne $T^c$ de la cellule de référence lorsque celle-ci est en fonctionnement et produit une densité totale de courant $I_{tot}$ pour une tension $U_{tot}$ donnée. Cette étape est similaire ou identique à l'étape 120 décrite précédemment. Les valeurs locales de la distribution spatiale de la température de consigne sont inférieures à des valeurs locales maximales correspondantes.

De manière facultative, il est avantageux de préciser la distribution spatiale $T_{x,y}^c$ de la température de consigne $T^c$ en fonction de la distribution spatiale de la concentration en espèce réactive au niveau de la zone active, entre l'entrée et la sortie du circuit de distribution correspondant. En effet, la consommation d'espèce réactive au sein de la zone active de la cellule conduit à une diminution progressive de la concentration d'espèce réactive le long du circuit de distribution. Cette diminution progressive se traduit par une diminution de la densité locale de courant produit par la cellule et donc de la production locale de chaleur, ce qui peut conduire à la formation d'inhomogénéités de la température de la cellule. Pour compenser cette diminution progressive de la production de chaleur, il est avantageux de définir une température de consigne qui tienne compte de la diminution de la concentration d'espèce réactive, de sorte que la température effective de la cellule en fonctionnement correspond à la température de consigne, celle-ci présentant avantageusement une distribution spatiale homogène. Pour cela, la distribution spatiale $\widetilde{T}_{x,y}^c$ de la température de consigne précisée $\widetilde{T}^c$ peut s'écrire, par exemple :

$$\widetilde{T}_{x,y}^c = T_{x,y}^c + K^i.[\ max(c_{x,y}^i) - c_{x,y}^i\ ] \qquad (3)$$

où $c_{x,y}^i$ est la distribution spatiale de la concentration $c^i$ en espèce réactive i, par exemple en oxygène, et $K^i$ est une constante positive, par exemple proche de 1, qui peut ultérieurement être ajustée. La distribution spatiale $c_{x,y}^i$ de la

concentration $c^i$ peut être estimée au premier ordre à partir du cheminement des canaux du circuit de distribution de l'espèce réactive considérée et en supposant une consommation homogène sur toute la zone active. Elle peut également être déterminée plus précisément par mesure expérimentale ou numérique de la distribution spatiale de la densité de courant dans une cellule similaire ou identique à la cellule de référence, qui permet de déduire celle de la concentration de l'espèce réactive. D'autres relations (3) peuvent convenir pour préciser la distribution spatiale de la température de consigne en tenant compte de l'évolution spatiale de la concentration en espèce réactive. On obtient ainsi une distribution spatiale $\widetilde{T}^c_{x,y}$ de la température de consigne $\widetilde{T}^c$ qui permet ainsi d'obtenir une distribution de la température effective de la cellule dont l'homogénéité est améliorée.

Par ailleurs, de manière facultative et éventuellement complémentaire de l'étape de précision de la température de consigne décrite précédemment, il est avantageux de préciser la distribution spatiale $T^c_{x,y}$ de la température de consigne $T^c$ en fonction de la distribution spatiale $\varphi_{x,y}$ de l'humidité relative $\varphi$ dans les circuits de distribution. L'humidité relative $\varphi$ est définie classiquement comme le rapport entre la pression partielle $P_{H2O}$ de la vapeur d'eau contenue localement dans le gaz circulant dans le circuit de distribution sur la pression de vapeur saturante $P_{sat}$. L'humidité relative $\varphi$ a un effet sur la réponse électrochimique. Aussi, pour compenser la variation locale de l'humidité relative, il est avantageux de définir une température de consigne qui compense cette variation locale, par exemple l'engorgement ou l'assèchement local des pores des couches de diffusion, de sorte que la température effective de la cellule en fonctionnement présente une distribution spatiale homogène. Pour cela, la distribution spatiale $\widetilde{T}'^c_{x,y}$ de la température de consigne précisée $\widetilde{T}'^c$ peut s'écrire, par exemple :

$$\widetilde{T}'^c_{x,y} = T^c_{x,y} + K^\varphi . [\, \varphi_{x,y} \,/\, \varphi_{in} \,] \qquad\qquad (4)$$

où $\varphi_{x,y}$ est la distribution spatiale de l'humidité relative $\varphi$ dans le circuit de distribution, $\varphi_{in}$ est l'humidité relative en entrée du circuit de distribution, et $K^\varphi$ est une constante positive, par exemple proche de 1, qui peut ultérieurement être ajustée. La distribution $\varphi_{x,y}$ de l'humidité relative $\varphi$ peut être estimée au premier ordre à partir du cheminement des canaux du circuit de distribution considéré et en supposant une densité de courant homogène sur toute la zone active. Elle peut également être déterminée plus précisément par mesure expérimentale ou numérique de la distribution spatiale de la densité de courant dans une cellule similaire ou identique à la cellule de référence, qui permet de déduire celle de l'humidité relative. D'autres relations (4) peuvent convenir pour préciser la distribution spatiale de la température de consigne à partir de l'évolution spatiale de l'humidité relative. On obtient ainsi une distribution spatiale $\widetilde{T}^c_{x,y}$ de la température de consigne $\widetilde{T}^c$ qui permet ainsi d'obtenir une distribution de la température effective de la cellule dont l'homogénéité est améliorée.

Lors d'une étape 230, on obtient une distribution spatiale $D^r_{x,y}$ d'une première grandeur thermique représentative de l'évacuation de la chaleur $D^r$ au sein de la cellule en fonctionnement. La première grandeur thermique est ici le débit massique $D^r$ de fluide caloporteur dans le circuit de refroidissement. Cette distribution $D^r_{x,y}$ n'est pas estimée mais est issue d'une mesure par des moyens expérimentaux ou numériques. Elle peut ainsi être obtenue par mesure expérimentale au sein d'une cellule électrochimique présentant les mêmes propriétés que la cellule de référence définie lors de l'étape 210, par exemple au moyen d'une technique de type PIV (*Particle Image Velocimetry,* en anglais) ou de toute autre technique adaptée, réalisée dans un circuit de refroidissement présentant les mêmes caractéristiques dimensionnelles que celui de la cellule de référence. La distribution $D^r_{x,y}$ de débit massique $D^r$ peut également être obtenue par simulation numérique à partir d'un logiciel de simulation d'écoulement tel que, par exemple, FLUENT ou COMSOL.

Lors d'une étape 240, on estime la distribution spatiale $Q^e_{x,y}$ d'une seconde grandeur thermique $Q^e$ à partir de ladite distribution spatiale $T^c_{x,y}$ de la température de consigne $T^c$ définie lors de l'étape 220 et de ladite distribution spatiale $D^r_{x,y}$ du débit de fluide caloporteur $D^r$ obtenu lors de l'étape 230. La seconde grandeur thermique est représentative de la production locale de chaleur et correspond ici au flux local de chaleur $Q^e$ qu'évacue le fluide caloporteur $D^r$ pour obtenir la température de consigne $T^c$.

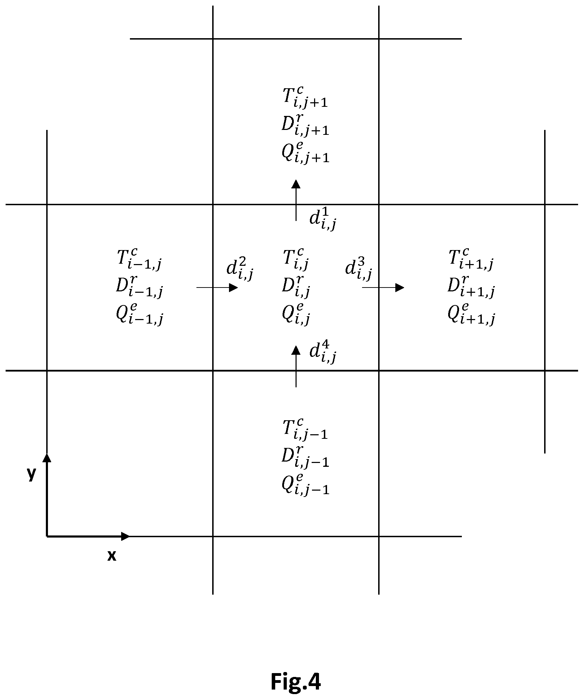

Pour cela, comme l'illustre la figure 4, on discrétise le circuit de refroidissement en un maillage bidimensionnel ou tridimensionnel, ici bidimensionnel, dont chaque maille est un volume élémentaire (i,j) traversé par le fluide caloporteur.

Ainsi, chaque maille (i,j) du circuit de distribution présente deux grandeurs connues : la température locale $T^c_{i,j}$ de consigne et le débit local $D^r_{i,j}$ de fluide caloporteur ; et une grandeur à déterminer : le flux local de chaleur produite $Q^e_{i,j}$. On calcule ensuite les transferts thermiques et fluidiques entre la maille considérée et les mailles adjacentes en déterminant d'une part les différences de température, et d'autre part les débits du fluide caloporteur au niveau des quatre facettes de la maille considérée. Ce calcul peut être effectué par simulation numérique par ordinateur, sur ledit maillage. Cela revient à résoudre un modèle numérique discret exprimant la seconde grandeur thermique, à savoir ici le flux local de chaleur, en fonction de la température locale et de la première grandeurthermique, à savoir ici le débit local du fluide caloporteur. Le modèle numérique, dit électrochimique, peut être exprimé par la relation (7).

Les différences de température au niveau des quatre facettes de la maille (i,j) peuvent être calculées de la manière suivante :

$$\delta T^1_{i,j} = T^c_{i,j} - T^c_{i,j+1} \qquad (5\text{-}1)$$

$$\delta T^2_{i,j} = T^c_{i,j} - T^c_{i-1,j} \qquad (5\text{-}2)$$

$$\delta T^3_{i,j} = T^c_{i,j} - T^c_{i+1,j} \qquad (5\text{-}3)$$

$$\delta T^4_{i,j} = T^c_{i,j} - T^c_{i,j-1} \qquad (5\text{-}4)$$

Les débits du fluide caloporteur au niveau des quatre facettes de la maille (i,j) peuvent être obtenus par projection du débit massique $D^r_{i,j}$ (ici une donnée vectorielle) sur les vecteurs $e_x$ et $e_y$ passant respectivement par les mailles (i-1,j), (i,j) et (i+1,j), et par les mailles (i,j-1), (i,j) et (i,j+1) :

$$d^1_{i,j} = (D^r_{i,j} \cdot e_y + D^r_{i,j+1} \cdot e_y)/2 \qquad (6\text{-}1)$$

$$d^2_{i,j} = (D^r_{i,j} \cdot e_x + D^r_{i-1,j} \cdot e_x)/2 \qquad (6\text{-}2)$$

$$d^3_{i,j} = (D^r_{i,j} \cdot e_x + D^r_{i+1,j} \cdot e_x)/2 \qquad (6\text{-}3)$$

$$d^4_{i,j} = (D^r_{i,j} \cdot e_y + D^r_{i,j-1} \cdot e_y)/2 \qquad (6\text{-}4)$$

Par convention, on considère que le débit local $d_{i,j}$ est positif lorsque le fluide entre dans la maille (i,j) et négatif lorsqu'il en sort.

On calcule enfin la distribution spatiale $Q^e_{x,y}$ du flux $Q^e$ de chaleur produit par la cellule à partir de la relation :

$$Q^e_{x,y} \approx Q^e_{i,j} = \sum_{k=1}^{4} d^k_{i,j} \cdot c_p \cdot \delta T^k_{i,j} \qquad (7)$$

On obtient ainsi la distribution spatiale du flux de chaleur $Q^e$ que doit produire la cellule pour que la distribution de température effective corresponde à celle de la température de consigne, connaissant la distribution du débit massique effectif du fluide caloporteur dans le circuit de distribution.

Lors d'une étape 250, on détermine la distribution spatiale $k^f_{x,y}$ de la perméabilité k en fonction de la distribution spatiale $Q^e_{x,y}$ du flux de chaleur produite $Q^e$. Pour cela, on peut estimer tout d'abord la distribution spatiale de la densité d'un signal électrique produit par la cellule en fonctionnement, par exemple une densité de courant $I^e$, à partir de la distribution spatiale $Q^e_{x,y}$ estimée du flux de chaleur produite $Q^e$. Dans la mesure où le flux de chaleur produite $Q^e$ est approximativement proportionnel à la densité de courant $I^e$, celle-ci peut être déterminée à partir de la relation :

$$I^e_{x,y} = Q^e_{x,y} \cdot \frac{I_{tot}}{Q_{tot}} \qquad (8)$$

où $I_{tot}$ est la densité de courant totale délivrée par la cellule électrochimique en fonctionnement, et $Q_{tot}$ est le flux de chaleur produite totale obtenue par intégrale de la distribution spatiale $Q^e_{x,y}$ sur toute la surface active.

Ensuite, on détermine la nouvelle distribution spatiale $k^f_{x,y}$ de la perméabilité k à partir de la densité locale du courant électrique $I^e_{x,y}$. Pour cela, une approche consiste à déterminer les valeurs minimale $k_{min}$ et maximale $k_{max}$ de la perméabilité de la couche de diffusion cathodique. Il peut s'agir d'une mesure expérimentale sur un échantillon de cellule présentant les mêmes propriétés que celles de la cellule de référence, ou d'une mesure par simulation numérique. On calcule ensuite la distribution spatiale $k^f_{x,y}$ par exemple à partir de la relation :

$$k^f_{x,y} = \max\left( k_{max}, k_{min}\, \frac{I^e_{max}}{I^e_{x,y}} \right) \qquad (9)$$

où $I^e_{max}$ est la valeur maximale de la densité locale de courant $I^e_{x,y}$. La perméabilité locale varie ainsi linéairement entre les valeurs minimale $k_{min}$ et maximale $k_{max}$ en fonction de la valeur locale de la densité de courant $I^e$. Bien entendu, toute autre loi, par exemple polynomiale, exponentielle ou logarithmique, faisant varier la perméabilité locale de sorte que la valeur maximale $k_{max}$ corresponde à une densité locale de courant maximale et inversement, peut convenir. Les valeurs minimale $k_{min}$ et maximale $k_{max}$ peuvent être prédéterminées en fonction de la puissance électrique globale UI voulue de la cellule électrochimique, où U est la tension électrique et I la densité de courant électrique mesurées aux bornes de la cellule.

On a ainsi déterminé la distribution spatiale $k^f_{x,y}$ de la perméabilité k qui tienne compte de la distribution de production d'énergie électrique $I^e$ et donc thermique $Q^e$ qu'il faudrait pour que la température effective de la cellule en fonctionnement corresponde à la température de consigne $T^c$, en considérant l'évacuation effective $D^r$ de la chaleur par le circuit de refroidissement. Dans la mesure où la température de consigne est avantageusement homogène spatialement, une cellule dont au moins l'une des électrodes comporte une couche de diffusion dont la perméabilité k est répartie suivant la distribution spatiale ainsi déterminé $k^f_{x,y}$ présente, lorsqu'elle est en fonctionnement au point de polarisation $U_{tot}$ et $I_{tot}$, une température effective dont la distribution spatiale est homogène.

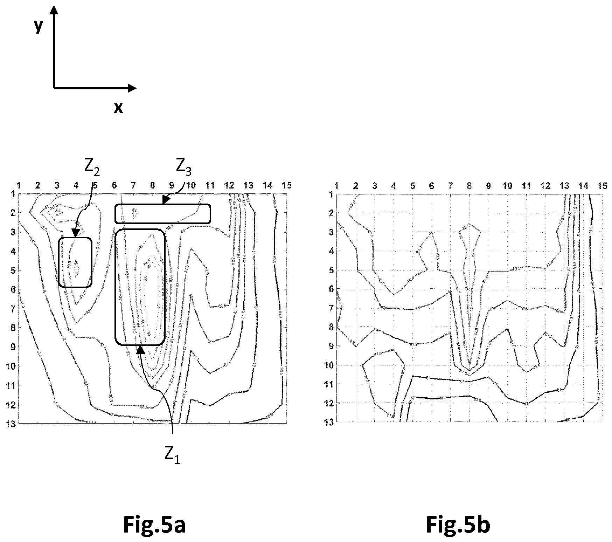

La figure 5a illustre un exemple de distribution spatiale de température effective d'une cellule électrochimique en fonctionnement, dans le cas où les couches de diffusion présentent une perméabilité sensiblement uniforme. Trois zones de sur-température, ou zones de points chauds, sont présentes. Dans cet exemple, la densité de courant est de 0,5A/cm², la pression est de 1,5bar et la température du fluide caloporteur en sortie du circuit de refroidissement est de 80°C. L'humidité relative est de 50% à l'anode et à la cathode. La stoechiométrie est de 1,5 à l'anode et de 1,8 à la cathode. La couche de diffusion présente une épaisseur moyenne de 246µm et une porosité de 0,76.

La figure 5b illustre la distribution spatiale de température effective de la même cellule électrochimique en fonctionnement, dans le cas où au moins une couche de diffusion présente une perméabilité à la distribution spatiale modifiée selon le premier mode de réalisation du procédé (figure 2). On peut remarquer que la distribution de température est sensiblement homogène et ne présente pas de zones de sur-température.

Un procédé de réalisation d'une électrode de cellule électrochimique est maintenant décrit, ici la cathode de la cellule. On considère une cellule électrochimique identique ou similaire à la cellule de référence définie lors des étapes 110 et 210. Elle comporte deux électrodes séparées l'une de l'autre par un électrolyte et disposées entre deux plaques bipolaires adaptées à amener des espèces réactives aux électrodes et à évacuer de la chaleur produite par la cellule en fonctionnement. Les électrodes comportent chacune une couche de diffusion et une couche active. La cathode présente ici une couche de diffusion dont la perméabilité k est répartie spatialement selon une distribution initiale $k_{x,y}^{i}$.

On détermine, par le procédé décrit précédemment en référence aux figures 2 et 3, une distribution spatiale $k_{x,y}^{f}$ de la perméabilité de la couche de diffusion cathodique. On réalise ensuite, lors d'une étape 160 (figure 2) ou 260 (figure 3), la cathode de sorte que la perméabilité k de la couche de diffusion présente la distribution spatiale $k_{x,y}^{f}$ déterminée. Ainsi, on modifie localement la perméabilité k de la couche de diffusion de manière à former des inhomogénéités dans la distribution spatiale $k_{x,y}$ en vue de compenser les inhomogénéités de la température effective de la cellule en fonctionnement vis-à-vis d'une température de consigne. A titre d'exemple, on diminue localement la perméabilité de la couche de diffusion dans des zones où la température effective de la cellule est susceptible d'être supérieure à la température de consigne. Ainsi, la quantité locale d'espèce réactive susceptible de diffuser jusqu'à la couche active est diminuée, ce qui diminue en conséquence la densité locale de courant et donc le flux local de chaleur produite. Ainsi, la température effective de la cellule correspond localement à la température de consigne.

Pour cela, à titre d'exemple on imprègne la couche de diffusion d'un produit de colmatage dans les zones $Z_i$ identifiées de sur-température. Le produit de colmatage peut comprendre, à titre d'exemple, du $TiO_2$ ou de la silice colloïdale, voire du carbonate de calcium. La quantité de produit de colmatage imprégné localement dans la couche de diffusion peut ainsi modifier la porosité de celle-ci pour ainsi obtenir une perméabilité locale $k_{Zi}$ présentant la valeur désirée.

Le produit de colmatage peut être une encre comportant de l'eau par exemple à hauteur de 92% à 98%, du PTFE de manière à obtenir l'hydrophobie souhaitée de la couche de diffusion, par exemple à hauteur de 0,5% à 3%, un dispersant, par exemple du triton X-100, par exemple à hauteur de 0,3%, et du $TiO_2$ pour colmater les pores du matériau poreux de la couche de diffusion, par exemple à hauteur de 1% à 5%. La quantité de produit de colmatage ayant imprégné localement la couche de diffusion peut ainsi en diminuer la porosité de la valeur initiale, par exemple 80%, à 20% voire moins, par exemple 10% ou 0%, ce qui impacte d'autant la perméabilité. Il a ainsi été remarqué qu'une diminution locale de la porosité de la couche de diffusion de 70% à 10% entraîne une diminution de l'ordre de 2°C dans la zone considérée.

Le produit de colmatage peut être déposé à la surface de la couche de diffusion de la cathode, dans une zone $Z_i$ de sur-température identifiée, par toutes les techniques de dépôts connues de l'homme du métier, par exemple par sérigraphie. Ainsi, un écran de sérigraphie est réalisé qui forme un maillage d'ouvertures traversantes, par exemple de quelques centimètres carrés de surface. Les ouvertures sont obturées pour ne garder que certaines ouvertures destinées à assurer le dépôt du produit de colmatage dans les zones $Z_i$ identifiées. On dépose ensuite l'écran sur la couche de diffusion, par exemple du côté de la couche opposée à la couche active, puis on dépose le produit de colmatage sur la couche de diffusion au travers de l'écran de sérigraphie. Après retrait de l'écran, seules les zones $Z_i$ sont imprégnées du produit de colmatage. La quantité de produit de colmatage peut être ajustée en effectuant plusieurs dépôts successifs dans les mêmes zones $Z_i$, en s'assurant que le produit déposé lors d'une étape précédente ait pu s'infiltrer dans la couche de diffusion. Une étape de séchage est prévue pour évaporer l'eau du produit de colmatage.

Ainsi, la couche de diffusion comporte une perméabilité, ou porosité, dont la valeur varie localement. Dans au moins une zone $Z_i$, la valeur locale de la perméabilité ou de la porosité est inférieure à la valeur moyenne de la perméabilité ou de la porosité hors de cette zone $Z_i$.

Des modes de réalisation particuliers viennent d'être décrits. Différentes variantes et modifications apparaîtront à l'homme du métier.

**Revendications**

1. Procédé de détermination d'une distribution spatiale $\left(k_{x,y}^{f}\right)$ d'un paramètre d'intérêt (k) représentatif d'une perméabilité d'une couche de diffusion d'au moins une électrode d'une cellule électrochimique, ladite cellule comportant deux électrodes séparées l'une de l'autre par un électrolyte et disposées entre deux plaques bipolaires adaptées à amener des espèces réactives aux électrodes et à évacuer de la chaleur produite par la cellule en fonctionnement, au moins une électrode comportant une couche de diffusion adaptée à assurer la diffusion d'espèce réactive jusqu'à l'électrolyte, ledit procédé comprenant les étapes suivantes :

i) fourniture (110 ; 210) d'une cellule électrochimique au sein de laquelle le paramètre d'intérêt (k) est réparti selon une distribution spatiale initiale $(k_{x,y}^i)$, pour laquelle la distribution spatiale d'une température au sein de la cellule électrochimique en fonctionnement présente au moins une valeur locale supérieure ou égale à une valeur locale maximale prédéterminée ;

ii) définition (120 ; 220) d'une distribution spatiale $(T_{x,y}^c)$ d'une température de consigne ($T^c$) au sein de ladite cellule électrochimique en fonctionnement, telle que les valeurs locales de température sont inférieures à des valeurs locales maximales prédéterminées ;

iii) mesure (130 ; 230) d'une distribution spatiale $(D_{x,y}^r)$ d'une première grandeur thermique représentative de l'évacuation locale de la chaleur ($D^r$) au sein de ladite cellule électrochimique en fonctionnement ;

iv) estimation (140; 240) d'une distribution spatiale $(Q_{x,y}^e)$ d'une seconde grandeur thermique ($Q^e$) représentative de la production locale de chaleur ($Q^e$) au sein de ladite cellule électrochimique en fonctionnement, en fonction de ladite distribution spatiale $(T_{x,y}^c)$ de la température de consigne ($T^c$) et de ladite distribution spatiale mesurée $(D_{x,y}^r)$ de la première grandeur thermique ($D^r$), de sorte que la distribution spatiale de température de ladite cellule électrochimique en fonctionnement, dont la première grandeur thermique ($D^r$) présente ladite distribution spatiale mesurée $(D_{x,y}^r)$ et la seconde grandeur thermique ($Q^e$) présente ladite distribution spatiale estimée $(Q_{x,y}^e)$, soit sensiblement égale à celle $(T_{x,y}^c)$ de la température de consigne ($T^c$) ;

v) détermination (150 ; 250) d'une distribution spatiale $(k_{x,y}^f)$ du paramètre d'intérêt (k) en fonction de la distribution spatiale $(Q_{x,y}^e)$ de la seconde grandeur thermique ($Q^e$).

2. Procédé de détermination selon la revendication 1, dans lequel les plaques bipolaires sont formées de deux tôles accolées l'une à l'autre, chaque tôle comportant des bossages formant au niveau d'une face dite externe un circuit de distribution d'une espèce réactive, les bossages des tôles formant ensemble, au niveau de faces dites internes opposées aux faces externes, un circuit de refroidissement comportant des canaux de refroidissement qui communiquent fluidiquement entre eux entre une entrée et une sortie du circuit de refroidissement.

3. Procédé de détermination selon la revendication 1 ou 2, dans lequel l'étape de détermination de la distribution spatiale du paramètre d'intérêt est en outre effectuée en fonction d'une valeur prédéterminée d'un paramètre représentatif d'une puissance électrique globale de la cellule électrochimique.

4. Procédé de détermination selon l'une quelconque des revendications 1 à 3, dans lequel l'étape d'estimation d'une distribution spatiale de la seconde grandeur thermique comporte :

   - une phase de réalisation d'un maillage d'un circuit de refroidissement d'au moins une plaque bipolaire de la cellule électrochimique dans lequel est destiné à s'écouler un fluide caloporteur ;
   - une phase de simulation numérique par ordinateur de la seconde grandeur thermique, sur ledit maillage, par résolution d'un modèle numérique discret exprimant la seconde grandeur thermique en fonction de la température locale et de la première grandeur thermique.

5. Procédé de détermination selon l'une quelconque des revendications 1 à 4, dans lequel la première grandeur thermique est le débit local effectif ($D^r$) mesuré d'un fluide caloporteur circulant dans un circuit de refroidissement d'une plaque bipolaire de la cellule, et la seconde grandeur thermique est le flux local de chaleur ($Q^e$) produite par la cellule en fonctionnement.

6. Procédé de détermination selon la revendication 5, dans lequel l'étape v) comporte :

   a) une première sous-étape dans laquelle on estime une distribution spatiale de la densité d'un signal électrique (I$^e$) produit par la cellule en fonctionnement, à partir de ladite distribution spatiale estimée du flux de chaleur produite (Q$^e$), et

b) une deuxième sous-étape dans laquelle on détermine la distribution spatiale du paramètre d'intérêt (k) à partir de ladite distribution spatiale de la densité du signal électrique (I$^e$).

7. Procédé de réalisation d'une électrode de cellule électrochimique, comportant les étapes dans lesquelles :

i) on considère une cellule électrochimique de référence comportant deux électrodes séparées l'une de l'autre par un électrolyte et disposées entre deux plaques bipolaires adaptées à amener des espèces réactives aux électrodes et à évacuer de la chaleur produite par la cellule en fonctionnement, au moins une électrode comportant une couche de diffusion adaptée à assurer la diffusion d'espèce réactive jusqu'à l'électrolyte, la couche de diffusion présentant un paramètre d'intérêt représentatif d'une perméabilité (k) répartie spatialement selon une distribution initiale $(k_{x,y}^i)$ ;

ii) on détermine, par le procédé (100 ; 200) selon l'une quelconque des revendications précédentes, une distribution spatiale $(k_{x,y}^f)$ du paramètre de perméabilité (k) ;

iii) on réalise (160 ; 260) ladite électrode de sorte que le paramètre de perméabilité (k) de la couche de diffusion de celle-ci présente la distribution spatiale $(k_{x,y}^f)$ déterminée.

8. Procédé de réalisation selon la revendication 7, dans lequel l'étape de réalisation de ladite électrode comporte le dépôt d'un produit de colmatage dans au moins une zone (Z$_i$) de la couche de diffusion préalablement identifiée à partir de ladite distribution spatiale déterminée $(k_{x,y}^f)$ du paramètre de perméabilité (k).

9. Procédé de réalisation selon la revendication 8, dans lequel le produit de colmatage déposé est adapté à diminuer une porosité de la couche de diffusion dans ladite zone (Z$_i$).

10. Procédé de réalisation selon la revendication 8 ou 9, dans lequel le produit de colmatage est déposé par sérigraphie au moyen d'un écran de sérigraphie comportant une pluralité d'ouvertures obturées hors de ladite zone (Z$_i$).

11. Procédé de réalisation d'une cellule électrochimique, comportant les étapes suivantes :

- on considère une cellule électrochimique de référence comportant deux électrodes séparées l'une de l'autre par un électrolyte et disposées entre deux plaques bipolaires adaptées à amener des espèces réactives aux électrodes et à évacuer de la chaleur produite par la cellule en fonctionnement, au moins une électrode comportant une couche de diffusion adaptée à assurer la diffusion d'espèce réactive jusqu'à l'électrolyte, la couche de diffusion présentant un paramètre d'intérêt représentatif d'une perméabilité (k) répartie spatialement selon une distribution initiale $(k_{x,y}^i)$ ;

- on détermine, par le procédé de détermination selon l'une quelconque des revendications 1 à 6, une distribution spatiale $(k_{x,y}^f)$ du paramètre d'intérêt (k) ;

- on réalise la cellule électrochimique sur la base de la cellule électrochimique de référence dans laquelle le paramètre d'intérêt (k) présente la distribution spatiale $(k_{x,y}^f)$ déterminée.

12. Support d'enregistrement d'informations, comportant des instructions pour la mise en oeuvre du procédé de détermination selon l'une quelconque des revendications 1 à 6, ces instructions étant aptes à être exécutées par un processeur.

**Patentansprüche**

1. Verfahren zur Bestimmung einer räumlichen Verteilung $(k_{x,y}^f)$ eines interessierenden Parameters (k), der für eine Permeabilität einer Diffusionsschicht wenigstens einer Elektrode einer elektrochemischen Zelle repräsentativ ist, wobei die Zelle zwei Elektroden aufweist, die durch einen Elektrolyten voneinander getrennt sind und zwischen zwei bipolaren Platten angeordnet sind, die dafür ausgelegt sind, den Elektroden reaktive Spezies zuzuführen und von der Zelle im Betrieb erzeugte Wärme abzuleiten, wobei wenigstens eine Elektrode eine Diffusionsschicht aufweist, die dafür ausgelegt ist, die Diffusion von reaktiver Spezies bis zu dem Elektrolyten sicherzustellen, wobei das Verfahren die folgenden Schritte umfasst:

i) Bereitstellung (110; 210) einer elektrochemischen Zelle, innerhalb welcher der interessierende Parameter (k) gemäß einer räumlichen Anfangsverteilung $\left(k_{x,y}^{i}\right)$ verteilt ist, für welche die räumliche Verteilung einer Temperatur innerhalb der elektrochemischen Zelle im Betrieb wenigstens einen lokalen Wert aufweist, der größer oder gleich einem vorbestimmten maximalen lokalen Wert ist;

ii) Definition (120, 220) einer räumlichen Verteilung $\left(T_{x,y}^{c}\right)$ einer Solltemperatur ($T^c$) innerhalb der elektrochemischen Zelle im Betrieb, derart, dass die lokalen Temperaturwerte niedriger als vorbestimmte maximale lokale Werte sind;

iii) Messung (130, 230) einer räumlichen Verteilung $\left(D_{x,y}^{r}\right)$ einer ersten thermischen Größe, die für die lokale Ableitung der Wärme ($D^r$) innerhalb der elektrochemischen Zelle im Betrieb repräsentativ ist;

iv) Schätzung (140; 240) einer räumlichen Verteilung $\left(Q_{x,y}^{e}\right)$ einer zweiten thermischen Größe ($Q^e$), die für die lokale Erzeugung von Wärme ($Q^e$) innerhalb der elektrochemischen Zelle im Betrieb repräsentativ ist, in Abhängigkeit von der räumlichen Verteilung $\left(T_{x,y}^{c}\right)$ einer Solltemperatur ($T^c$) und der gemessenen räumlichen Verteilung $\left(D_{x,y}^{r}\right)$ der ersten thermischen Größe ($D^r$), derart, dass die räumliche Temperaturverteilung der elektrochemischen Zelle im Betrieb, deren erste thermische Größe ($D^r$) die gemessene räumlichen Verteilung $\left(D_{x,y}^{r}\right)$ aufweist und deren zweite thermische Größe ($Q^e$) die geschätzte räumliche Verteilung $\left(Q_{x,y}^{e}\right)$ aufweist, im Wesentlichen gleich derjenigen $\left(T_{x,y}^{c}\right)$ der Solltemperatur ($T^c$) ist;

v) Bestimmung (150; 250) einer räumlichen Verteilung $\left(k_{x,y}^{f}\right)$ des interessierenden Parameters (k) in Abhängigkeit von der räumlichen Verteilung $\left(Q_{x,y}^{e}\right)$ der zweiten thermischen Größe ($Q^e$).

2. Verfahren zur Bestimmung nach Anspruch 1, wobei die bipolaren Platten von zwei aneinandergefügten Blechen gebildet werden, wobei jedes Blech Erhebungen aufweist, die an einer sogenannten Außenseite einen Verteilungskreislauf einer reaktiven Spezies bilden, wobei die Erhebungen der Bleche zusammen an sogenannten Innenseiten, die den Außenseiten gegenüberliegen, einen Kühlkreislauf bilden, der Kühlkanäle aufweist, welche eine Fluidverbindung zwischen einem Eingang und einem Ausgang des Kühlkreislaufes herstellen.

3. Verfahren zur Bestimmung nach Anspruch 1 oder 2, wobei der Schritt der Bestimmung der räumlichen Verteilung des interessierenden Parameters außerdem in Abhängigkeit von einem vorbestimmten Wert eines Parameters durchgeführt wird, der für eine elektrische Gesamtleistung der elektrochemischen Zelle repräsentativ ist.

4. Verfahren zur Bestimmung nach einem der Ansprüche 1 bis 3, wobei der Schritt der Schätzung einer räumlichen Verteilung der zweiten thermischen Größe umfasst:

- eine Phase der Erstellung eines Netzes für einen Kühlkreislauf wenigstens einer bipolaren Platte der elektrochemischen Zelle, in welchem ein Wärmeträgerfluid fließen soll;
- eine Phase der numerischen Computersimulation der zweiten thermischen Größe auf dem Netz durch Lösung eines diskreten numerischen Modells, welches die zweite thermische Größe in Abhängigkeit von der lokalen Temperatur und der ersten thermischen Größe ausdrückt.

5. Verfahren zur Bestimmung nach einem der Ansprüche 1 bis 4, wobei die erste thermische Größe der gemessene tatsächliche lokale Durchsatz ($D^r$) eines Wärmeträgerfluids ist, das in einem Kühlkreislauf einer bipolaren Platte der Zelle zirkuliert, und die zweite thermische Größe der lokale Wärmefluss ($Q^e$) ist, der von der Zelle im Betrieb erzeugt wird.

6.  Verfahren zur Bestimmung nach Anspruch 5, wobei Schritt v) umfasst:

    a) einen ersten Teilschritt, in welchem eine räumliche Verteilung der Dichte eines elektrischen Signals ($I^e$), das von der Zelle im Betrieb erzeugt wird, ausgehend von der geschätzten räumlichen Verteilung des erzeugten Wärmeflusses ($Q^e$) geschätzt wird, und
    b) einen zweiten Teilschritt, in welchem die räumliche Verteilung des interessierenden Parameters (k) ausgehend von der räumlichen Verteilung der Dichte des elektrischen Signals ($I^e$) bestimmt wird.

7.  Verfahren zur Herstellung einer Elektrode einer elektrochemischen Zelle, welches die folgenden Schritte umfasst:

    i) Es wird eine elektrochemische Referenzzelle betrachtet, welche zwei Elektroden aufweist, die durch einen Elektrolyten voneinander getrennt sind und zwischen zwei bipolaren Platten angeordnet sind, die dafür ausgelegt sind, den Elektroden reaktive Spezies zuzuführen und von der Zelle im Betrieb erzeugte Wärme abzuleiten, wobei wenigstens eine Elektrode eine Diffusionsschicht aufweist, die dafür ausgelegt ist, die Diffusion von reaktiver Spezies bis zu dem Elektrolyten sicherzustellen, wobei die Diffusionsschicht einen interessierenden Parameter (k) aufweist, der für eine Permeabilität repräsentativ ist, die gemäß einer Anfangsverteilung $\left(k_{x,y}^i\right)$ räumlich verteilt ist;
    ii) es wird durch das Verfahren (100; 200) nach einem der vorhergehenden Ansprüche eine räumliche Verteilung $\left(k_{x,y}^f\right)$ des Permeabilitätsparameters (k) bestimmt;
    iii) die Elektrode wird derart hergestellt (160; 260), dass der Permeabilitätsparameter (k) der Diffusionsschicht derselben die bestimmte räumliche Verteilung $\left(k_{x,y}^f\right)$ aufweist.

8.  Verfahren zur Herstellung nach Anspruch 7, wobei der Schritt der Herstellung der Elektrode die Aufbringung eines Dichtungsmittels in wenigstens einem Bereich ($Z_i$) der Diffusionsschicht umfasst, der zuvor ausgehend von der bestimmten räumlichen Verteilung $\left(k_{x,y}^f\right)$ des Permeabilitätsparameters (k) identifiziert wurde.

9.  Verfahren zur Herstellung nach Anspruch 8, wobei das aufgebrachte Dichtungsmittel dafür ausgelegt ist, eine Porosität der Diffusionsschicht in dem Bereich ($Z_i$) zu verringern.

10. Verfahren zur Herstellung nach Anspruch 8 oder 9, wobei das Dichtungsmittel durch Siebdruck mittels einer Siebdruckschablone aufgebracht wird, die außerhalb des Bereichs ($Z_i$) mehrere verschlossene Öffnungen aufweist.

11. Verfahren zur Herstellung einer elektrochemischen Zelle, welches die folgenden Schritte umfasst:

    - Es wird eine elektrochemische Referenzzelle betrachtet, welche zwei Elektroden aufweist, die durch einen Elektrolyten voneinander getrennt sind und zwischen zwei bipolaren Platten angeordnet sind, die dafür ausgelegt sind, den Elektroden reaktive Spezies zuzuführen und von der Zelle im Betrieb erzeugte Wärme abzuleiten, wobei wenigstens eine Elektrode eine Diffusionsschicht aufweist, die dafür ausgelegt ist, die Diffusion von reaktiver Spezies bis zu dem Elektrolyten sicherzustellen, wobei die Diffusionsschicht einen interessierenden Parameter (k) aufweist, der für eine Permeabilität repräsentativ ist, die gemäß einer Anfangsverteilung $\left(k_{x,y}^i\right)$ räumlich verteilt ist;
    - es wird durch das Verfahren zur Bestimmung nach einem der Ansprüche 1 bis 6 eine räumliche Verteilung $\left(k_{x,y}^f\right)$ des interessierenden Parameters (k) bestimmt;
    - die elektrochemische Zelle wird auf der Basis der elektrochemischen Referenzzelle hergestellt, in welcher der interessierende Parameter (k) die bestimmte räumliche Verteilung $\left(k_{x,y}^f\right)$ aufweist.

12. Informationsaufzeichnungsmedium, welches Anweisungen zur Durchführung des Verfahrens zur Bestimmung nach einem der Ansprüche 1 bis 6 umfasst, wobei diese Anweisungen von einem Prozessor ausgeführt werden können.

**Claims**

1. Method for determining a spatial distribution $\left(k_{x,y}^{f}\right)$ of a parameter of interest (k) representative of a permeability of a diffusion layer of at least one electrode of an electrochemical cell, said cell including two electrodes separated from each other by an electrolyte and placed between two bipolar plates suitable for bringing reactive species to the electrodes and for removing the heat produced by the cell in operation, at least one electrode including a diffusion layer suitable for ensuring the diffusion of a reactive species as far as the electrolyte, said method comprising the following steps:

   i) providing (110; 210) an electrochemical cell, within which the parameter of interest (k) is distributed with an initial spatial distribution $\left(k_{x,y}^{i}\right)$ and for which the spatial distribution of a temperature within the electrochemical cell in operation has at least one local value higher than or equal to a preset maximum local value;

   ii) defining (120; 220) a spatial distribution $\left(T_{x,y}^{c}\right)$ of a set-point temperature (T$^c$) within said electrochemical cell in operation, said distribution being such that the local temperature values are lower than preset maximum local values;

   iii) measuring (130; 230) a spatial distribution $\left(D_{x,y}^{r}\right)$ of a first thermal quantity representative of the local removal of heat (D$^r$) within said electrochemical cell in operation;

   iv) estimating (140; 240) a spatial distribution $\left(Q_{x,y}^{e}\right)$ of a second thermal quantity (Q$^e$) representative of the local production of heat (Q$^e$) within said electrochemical cell in operation, depending on said spatial distribution $\left(T_{x,y}^{c}\right)$ of the set-point temperature (T$^c$) and on said measured spatial distribution $\left(D_{x,y}^{r}\right)$ of the first thermal quantity (D$^r$), so that the spatial distribution of the temperature of said electrochemical cell in operation, the first thermal quantity (D$^r$) of which cell having said measured spatial distribution $\left(D_{x,y}^{r}\right)$ and the second thermal quantity (Q$^e$) of which cell having said estimated spatial distribution $\left(Q_{x,y}^{e}\right)$, is substantially equal to that $\left(T_{x,y}^{c}\right)$ of the set-point temperature (T$^c$); and

   v) determining (150; 250) a spatial distribution $\left(k_{x,y}^{f}\right)$ of the parameter of interest (k) depending on the spatial distribution $\left(Q_{x,y}^{e}\right)$ of the second thermal quantity (Q$^e$).

2. Determining method according to Claim 1, wherein the bipolar plates are formed from two sheets that are bonded to each other, each sheet including embossments forming, in what is called an external face, a circuit for distributing a reactive species, the embossments of the sheets together forming, in what are called internal faces that are opposite the external faces, a cooling circuit including cooling channels that communicate fluidically with one another between an inlet and an outlet of the cooling circuit.

3. Determining method according to Claim 1 or 2, wherein the step of determining the spatial distribution of the parameter of interest is furthermore carried out depending on a preset value of a parameter representative of an overall electrical power of the electrochemical cell.

4. Determining method according to any one of Claims 1 to 3, wherein the step of estimating a spatial distribution of the second thermal quantity includes:

   - a phase of generating a mesh of a cooling circuit of at least one bipolar plate of the electrochemical cell, through which circuit a head-transfer fluid is intended to flow; and
   - a phase of simulating numerically by computer the second thermal quantity on said mesh, by solving a discrete numerical model expressing the second thermal quantity as a function of the local temperature and of the first thermal quantity.

5. Determining method according to any one of Claims 1 to 4, wherein the first thermal quantity is the measured effective local flow rate (D$^r$) of a heat-transfer fluid flowing in a cooling circuit of a bipolar plate of the cell, and the second thermal quantity is the local heat flux (Q$^e$) produced by the cell in operation.

6. Determining method according to Claim 5, wherein step v) includes:

a) a first sub-step of estimating a spatial distribution of the density of an electrical signal ($I^e$) produced by the cell in operation, from said estimated spatial distribution of the produced heat flux ($Q^e$); and
b) determining a second sub-step in which the spatial distribution of the parameter of interest (k), from said spatial distribution of the density of the electrical signal ($I^e$).

7. Method for producing an electrochemical-cell electrode, including steps of:

i) considering a reference electrochemical cell, said cell including two electrodes separated from each other by an electrolyte and placed between two bipolar plates suitable for bringing reactive species to the electrodes and for removing the heat produced by the cell in operation, at least one electrode including a diffusion layer suitable for ensuring the diffusion of a reactive species as far as the electrolyte, the diffusion layer having a parameter of interest representative of a permeability (k) spatially distributed with an initial distribution $(k_{x,y}^i)$;
ii) determining a spatial distribution $(k_{x,y}^f)$ of the permeability parameter (k), using the method (100; 200) according to any one of the preceding claims; and
iii) producing said electrode (160; 260), so that the permeability parameter (k) of the diffusion layer thereof has the determined spatial distribution $(k_{x,y}^f)$.

8. Producing method according to Claim 7, wherein the step of producing said electrode includes depositing a sealant in at least one zone ($Z_i$) of the diffusion layer identified beforehand from said determined spatial distribution $(k_{x,y}^f)$ of the permeability parameter (k).

9. Producing method according to Claim 8, wherein the deposited sealant is suitable for decreasing a porosity of the diffusion layer in said zone ($Z_i$).

10. Producing method according to Claim 8 or 9, wherein the sealant is deposited by screen printing by means of a screen-printing screen including a plurality of obturated apertures outside of said zone ($Z_i$).

11. Method for producing an electrochemical cell, including the following steps of:

- considering a reference electrochemical cell, said cell including two electrodes separated from each other by an electrolyte and placed between two bipolar plates suitable for bringing reactive species to the electrodes and for removing the heat produced by the cell in operation, at least one electrode including a diffusion layer suitable for ensuring the diffusion of a reactive species as far as the electrolyte, the diffusion layer having a parameter of interest representative of a permeability (k) spatially distributed with an initial distribution $(k_{x,y}^i)$;
- determining a spatial distribution $(k_{x,y}^f)$ of the parameter of interest (k), using the determining method according to any one of Claims 1 to 6; and
- producing the electrochemical cell, on the basis of the reference electrochemical cell in which the parameter of interest (k) has the determined spatial distribution $(k_{x,y}^f)$.

12. Data storage medium containing instructions for implementing the determining method according to any one of Claims 1 to 6, these instructions being executable by a processor.

**Fig.1a**

**Fig.1b**

**Fig.2**

**Fig.3**

$T^c_{i,j+1}$
$D^r_{i,j+1}$
$Q^e_{i,j+1}$

$d^1_{i,j}$

$T^c_{i-1,j}$    $d^2_{i,j}$    $T^c_{i,j}$    $d^3_{i,j}$    $T^c_{i+1,j}$
$D^r_{i-1,j}$           $D^r_{i,j}$          $D^r_{i+1,j}$
$Q^e_{i-1,j}$           $Q^e_{i,j}$          $Q^e_{i+1,j}$

$d^4_{i,j}$

$T^c_{i,j-1}$
$D^r_{i,j-1}$
$Q^e_{i,j-1}$

y

x

**Fig.4**

**Fig.5a**                    **Fig.5b**

## RÉFÉRENCES CITÉES DANS LA DESCRIPTION

### Documents brevets cités dans la description

- FR 2976732
- WO 2007032903 A
- US 2009024373 A1
- WO 2013088122 A1

### Littérature non-brevet citée dans la description

- **SHOU DAHUA et al.** Effective permeability of gas diffusion layer in proton exchange membrane fuel cells. *INTERNATIONAL JOURNAL OF HYDROGEN ENERGY,* 15 Juillet 2013, vol. 38 (25), 10519-10526
- **FESER et al.** Experimental characterization of in-plane permeability of gas duffusion loyers. *Journal of Power Sources,* 2006, vol. 162, 1226-1231
- **ROBIN et al.** Development and experimental validation of a PEM fuel cell 2D model to study heterogeneities effects along large area cell suface. *International Journal of Hydrogen,* 2015, vol. 40, 10211-10230
- **INOUE et al.** Numerical analysis of relative humidity distribution in polymer electrolyte fuel cell stock including cooling water. *J. Power Sources,* 2006, vol. 162, 81-93